# EUROPEAN PATENT APPLICATION

(11) **EP 3 886 489 A1**
(43) Date of publication of application: **29.09.2021**
(21) Application number: 20165494.4
(22) Date of filing: 25.03.2020
(51) Int. Cl.: H04W 28/06, H04L 12/835, H04W 4/70

(54) **METHOD FOR OPTIMIZED DATA TRANSMISSION IN A WIRELESS NETWORK**

(71) Applicant: THALES DIS AIS Deutschland GmbH, 81541 München (DE)
(72) Inventor: BREUER, Volker, 16727 Boetzow (DE); KHALIQ, Osaid, 14052 BERLIN (DE); DENZIN, Florian, 10965 BERLIN (DE)
(74) Representative: Grevin, Emmanuel

(57) **Abstract**

The present invention relates to a method for uplink data transmission in a wireless network through a user equipment operating with at least one base station of said wireless network, comprising:
- receiving from said base station information indicative of at least one transmission packet size,
- determining a threshold size considering said at least one transmission packet size,
- collecting at least one payload data block in a packet pool,
- determining a packet pool size from the collected payload data blocks,
in case the packet pool size reaches the threshold size:
- transmitting at least one data packet comprising said payload data blocks being part of the packet pool to the base station.

## Description

### FIELD OF THE INVENTION

The present invention relates to a method for data transmission in a wireless network through a user equipment operating in said wireless network. The invention also pertains to a user equipment using said method.

### BACKGROUND OF THE INVENTION

Generally, in the field of wireless communication it is known that packet based data transmissions are carried out. For a regular user equipment, like a smartphone or multimedia device the transmitted data, e.g. as part of packet based voice communication, is constantly provided and fitted in the packet size governed by the serving base station, resp. the wireless network.

However for a multitude of loT (Internet of Things) devices the regular operation is organized that way, that only small amounts of data are transmitted. E.g. for metering devices the measured power consumption in a time period is submitted. As another example a vending machine may indicate for which of the offered products the stock runs under an alarm threshold values or a soap dispenser indicates that its filling level is below a threshold value.

In extreme cases such data transmission have the size of one or only a few bytes.

When the minimum packet size of the wireless network is much larger, but the total transmission only needs a fraction of the packet size, this wastes network resources. Moreover for transmission of one data packet, which carries a minimal payload, a lot of signalling is needed which wastes even more network resources and also costs energy for the user equipment. Besides the network resources it hence is also a waste of power of the user equipment, because transmission is done with little data and a lot of useless overhead, so called padding, to fill the related packet size.

However, on the other hand for a multitude of use cases the data transmission is not expected to take place momentary, that means within the next few seconds or minutes. As a illustrative example for metering devices the measurement may also be transmitted within hours. I.e. it would be sufficient for many use cases to once a day transmit the collected hourly power consumption, each with a time stamp, to get a very good impression about the power consumption footprint of the application comprising a wireless modem as user equipment resp. mobile terminal.

It is therefore the goal of present invention to overcome the mentioned disadvantages and to propose a solution for an improved data transmission scheme by a user equipment.

Further alternative and advantageous solutions would, accordingly, be desirable in the art.

### SUMMARY OF THE INVENTION

For this it is according to a first aspect of the invention suggested a method for uplink data transmission of a user equipment according to claim 1. It is further suggested according to a second aspect of the invention a user equipment according to claim 12.

According to the first aspect of the invention it is proposed a method for uplink data transmission in a wireless network through a user equipment operating with one of at least one base station of said wireless network, comprising:
- receiving from said base station information indicative of at least one transmission packet size,
- determining a threshold size considering said transmission packet size,
- collecting at least one payload data block in a packet pool,
- determining a packet pool size from the collected payload data blocks,
in case the packet pool size reaches the threshold size:
- transmitting at least one data packet comprising said payload data blocks being part of the packet pool to the base station.

This invention relates to a user equipment that is operating in conjunction with a wireless network. Such wireless network may be one of a cellular network like 3G, 4G or beyond, but also for networks operating in the wireless standards of Wifi (IEEE802.11), Wimax (IEEE802.16), Lora, Sigfox etc. the invention is applicable.

Said user equipments are in particular those belonging to the field of Internet of Things (loT), that is devices resp. applications with a communication module that allows a communication between said device and a remote server and/or the wireless network. Such user equipments are in particular metering devices, sensors etc. that means such devices that are not relying on a momentary data transmission.

The wireless networks generally apply packet based communication, known from TCP/IP traffic. However the data packet size is generally an average size for all types of user equipments operating in the wireless network. I.e. in the cellular standards typically a set of transport block size (TBS) is available. However for the mentioned type of user equipments still this size might be too large and lead to a bad usage of the available data packet size, and moreover a signalling overhead for such a low amount of data.

This is where the invention comes into play.

According to that the user equipment receives from the base station, it is currently camping on - also known as the serving base station - an information indicative of at least one transmission packet size.

It is in particular an information where the user equipment can derive the at least one transmission packet size. That may be a code as defined in the wireless network standard, that represents a certain size. Alternative ways of providing in a derivable form the at least one transmission packet size are encompassed by the invention.

Said at least one transmission packet size indicates the size e.g. in byte of the amount data that are to be transmitted with one data packet.

Alternatively or additionally the transmission packet size is predetermined on the user equipment, preferably based on previously received information from the base station or wireless network, like system information or the like. This in particular relates to quality of service (QoS) information etc.

In case of reception of more than one transmission packet sizes, the user equipment may choose one of it, which suits best the user equipments needs. In particular for loT devices which are regularly sending only a few data per occasion, the smallest transmission packet size is a good choice. Alternatively or additionally is determined by means of prediction on the side of the user equipment. This is in particular based on historical data collected during previous data transmission sessions.

On side of the user equipment then a threshold size is determined, which is supposed to act as a lowest fill level before a data transmission may be carried out under normal conditions.

This threshold size is preferably defined in the same unit as the received transmission packet size, or represented as a percentage of the transmission packet size.

Further the threshold size is smaller or at maximum equal to the transmission packet size, resp. 100% in the case of percentage.

It is useful to use a lower level, when the transmission of the submitted data shall not be delayed too much. On the other hand when it is too low, then the effect of the method gets lost.

Hence it is also a question of use case on the user equipment side, and consequently it is advantageous to decide on the user equipment level about the threshold size in comparison with the transmission packet size.

At least a value of 50% of the transmission packet size will lead to a waste of resource that is not larger than 50% of the available capacity, which is a good start.

The two described steps are in particular preparatory steps which are preferably carried out only once, or at least once per registration, e.g. after camping on a base station.

During runtime the user equipment gathers data that are to be sent to a remote server, in particular by way of the inventive method. Such data may be created by a sensor, e-meter or the like. That is after a predefined period of time a new measurement is carried out, and - in particular together with identification items and a time stamp - the measurement is transferred a payload data block. According to the inventive method each created payload data block is collected in a packet pool.

The packet pool is like a shopping basket a virtual or real memory area which is supposed to collect payload data blocks. In data structure wording it is a container, which may be implemented in various kinds of internal structure, like an array, concatenated lists.

One qualification of the packet pool is to allow to determine the packet pool size with is the total sum of size of the collected payload data blocks. This is again preferably in the same unit as the threshold size and the transmission packet size.

When said packet pool size reaches the threshold size, then a data packet shall be submitted to the base station, for sending to the envisaged remote server. That data packet comprises said payload data blocks collected in the packet pool.

With that it is assured that the data transmission of collected payload data blocks, which means in particular measurement results, is delayed until a sufficiently filled data packet is available.

This method is advantageous as it reliably avoids data transmissions of data packets with only a small fraction of the chosen transmission packet size, like the transport block size, holding actual payload. It consequently reduces congestion and a waste of network resources. It further saves power for the user equipment. Hence the inventive method is advantageous both for the user equipment and the wireless network.

According to an advantageous embodiment it is further proposed that at least one payload data block has assigned a transmission priority, wherein a payload data block with a higher transmission priority is considered for data transmission prior to a payload data block with lower transmission priority. This embodiment comprises that the payload data blocks shall be handled according to a structured type of data, which is translated into a transmission priority. The higher the transmission priority, then - in particular in case of a collision - the respective payload data block is consider for the next submitted data packet before a payload data block with lower transmission priority. This consideration of the transmission priority may in particular change the order of transmission.

This embodiment further is applicable when the user equipment, at least the controlling or application part, gathers data packets in time slots, e.g. every second.

Under the ceteris paribus assumption that all payload data blocks would be of equal size, and one payload data block is lacking until the threshold size (and transport block size) is reached, then two payload data blocks that are gathered in the same time slot would according to this embodiment considered for the next data transmission according to the transmission priority. Another use case for this embodiment applies for the situation that the transmission data blocks have different sizes. In case the packet pool already consists of a plurality of payload data blocks with lower transmission priority, then a payload data block with a higher transmission priority has arrived, which is too large to fit into the packet pool, then - instead of sending the data packet without the higher transmission priority - this embodiment comprises that as many payload data blocks of lower transmission priority needs to be removed from the packet pool (and of course kept for the next packet pool), as are needed to fit the big higher transmission priority payload data block. Once this higher transmission priority payload data block is collected in the packet pool, then preferably the data transmission is carried out.

The removal of a plurality of lower transmission priority payload data blocks is in particular governed by the time of arrival and/or the size of the respective payload data blocks, should they differ.

In case of equal transmission priority the data packet with the packet pool is preferably transmitted although the threshold value was not reached. Alternatively the payload data block with the shorter validity period is chosen. This could apply to the larger just arriving payload data block and lead to a removal of payload data blocks from the packet pool.

Should the payload data blocks have no or equal validity period, then the concept of first come, first served is preferably applied.

In a more elaborate approach, in particular in case of payload data blocks of variable sizes, it is aimed to achieve a best filling rate of the data packet, which in particular means to try to remove as few payload data blocks from the packet pool as needed in order to fit the new arriving larger payload data block. This allows to reduce the overhead, resp. the unused data packet size, where padding needs to be done. This approach is consequently the most efficient and less power consuming way.

In another preferred embodiment it is proposed that for determining the assigned transmission priority of at least one payload data blocks the method comprises considering at least one of:
- an status change of the user equipment,
- an input received from a remote server and/or the wireless network,
- an outside impact on the user equipment.

This embodiment suggest a couple of options under which circumstances the transmission priority is determined.

As one option a status change of the user equipment is foresee. That kind of status change may involve a certain event, like an expiring timer, or - in case of measurements - a certain threshold that was passed. Consequently the status change may in particular be application specific.

Preferably such events also include as a reaction to submit other content of the payload data blocks to be transmitted by the application of the user equipment. However, for carrying out the inventive method and this embodiment any kind of content analysis is preferably avoided, so that the trigger of a certain kind of message shall also determine the transmission priority in this special case.

Another option is any kind of input received from a remote server and/or wireless network. This might comprise an instruction, in particular also a request for a status update, for which preferably other urgency or QoS requirements are applied, than for regular messages like measurement reports.

Such instructions may either come from the remote server or a control server defined for a service, which might differ from the server that receives measurements. Alternatively the wireless network itself provides such instructions to the user equipment.

Finally an outside impact of the user equipment may be considered. This is in particular any kind of input through the user interface, that means in particular a button pressed e.g. by a human operator.

But also fraudulent operation, like trying to break a seal for accessing the SIM card, an event detected by an inertial sensor that identifies shaking or potential breaking of the user equipment, is supposed to fall under this option.

For such events it is typically comparably urgent to send the data preferably without delay.

However, an increase of the transmission priority alone would not necessarily achieve this goal, when the packet pool is also including the urgent payload data block still below the threshold size.

Hence it is suggested in another preferred embodiment wherein in case a payload data block with a predetermined transmission priority is collected, the transmission of said data packet is carried out regardless of the threshold size. With this embodiment it is achieved a kind of bypass for the delayed operation. This is done by assigning a predetermined transmission priority to the payload data block, preferably by the application. That means, e.g. in case of an emergency situation the application launches an emergency message to the remote server, which is translated into a payload data block. This gets assigned a predetermined transmission priority value, which is understood as "no-delay" message.

Consequently the method would when receiving such a payload data block carry out the data transmission immediately regardless if the threshold size is reached or not.

This might involve, that lower transmission priority payload data blocks, that are already collected in the packet pool, would also be transmitted with this transmission.

In order to not disturb the transmission however it is also preferable to decide that regardless or taking into account the filling rate of the packet pool, to remove such lower transmission priority payload data blocks from the current packet pool, at least in parts.

With this embodiment a fully integrated emergency bypass is implemented, that allows way quicker transmissions from such user equipments, due to the fact that they might in a vast majority transmit such regular delay-tolerant payload data blocks, but not to 100%. This embodiment therefore increases the acceptance of the inventive method dramatically.

According to another preferred embodiment it is proposed that in case the payload data block is larger than the transmission packet size,
carrying out the transmission of said data packet by splitting up said payload data block in at least two data packets.

This embodiment covers the situation of a payload data block that is larger in size than the transmission packet size. For that it is foreseen to split the payload data block at least in two data packets.

Preferably all involved two or more data packets are immediately due for sending.

This in particular also relates to the last part of the payload data block, even if it is from the size not sufficiently large to pass the threshold size.

This is advantageous in order that the receiving side does not have to wait longer than necessary until the complete payload data block is received. Should other, smaller, payload data blocks be currently waiting in the packet pool, it is in particular a question of transmission priority.

According to a preferred embodiment it is proposed that in case said payload data block larger in size than the transmission packet size has a higher transmission priority than the at least one payload data block already being collected in the packet pool, hereinafter the at least one lower priority payload data block, the method comprises the step of removing said at least one lower priority payload data block from the packet pool for the transmission of the split up payload data blocks, and adding said at least one lower priority payload data block to the packet pool once it allows adding payload data blocks of lower transmission priority.

This embodiment covers the situation of a large payload data block, when lower priority payload data blocks are already collected in the packet pool. According to that it is proposed to remove the already collected payload data block with lower transmission priority from the packet pool. It is of course maintained for transmission with a later payload data block.

Then the large payload data block with higher transmission priority is split in the necessary sizes for fitting into packet pools and to submit them as a data packet to the network.

The last section of the payload data block will be put in a packet pool, which may have sufficient space available for one or more of the removed lower priority payload data blocks. Then preferably one or more of the removed lower priority payload data block are added to said packet pool, and preferably immediately submitted.

In case another payload data block with a higher transmission priority than the lower priority data block has arrived for sending from the application, then this will preferably be taken into account for sending said packet pool as a data packet.

In another preferred embodiment it is proposed that said step of reception of an information indicative of at least one transmission packet size comprises receiving information indicative of at least two transmission packet sizes, and selecting one of the at least two transmission packet sizes,
in case of said payload data block being larger in size than the selected transmission packet size the method further comprises the step of:
selecting out of the at least two transmission packet sizes the one with that the packet pool size is achieved, that is closer to the threshold size derived from said one transmission packet size.

This embodiment also addresses the topic of a too large payload data block for one data packet. In this case however the user equipment receives from the base station at least two different transmission packet sizes values, for choosing the transmission packet size suited best for the way of data packet transmission.

Generally the user equipment would preferably select the smallest transmission packet size, in particular a user equipment out of the loT area. However for the case that a too large payload data block is delivered it might be, that with a small transmission packet size a large amount of padding would result, either in the first data packet - which is sent without the payload data block, or in the last. Padding means filling up a data packet which size is only partly used by the actual payload data.

A high amount of padding further means a low effectivity and consequently both a higher amount of energy consumption for the user equipment and signalling load for the wireless network. Moreover in a tariff based on transmitted size - which is generally advantageous in the loT field - the padded bytes are inevitably counted, and therefore increase the costs for the same amount of transmitted data.

Therefore in this embodiment it is proposed to rethink the selection of the smallest transmission packet size, when more options are available. Hence it is checked for which of the available transmission packet size the payload data block size with or without the large payload data block is closer to the threshold size, which is derived from the transmission packet size.

It could turn out, that a first and a second transmission packet size were received at the user equipment, wherein the second transmission packet size is more than double the size than the first transmission packet size. With the second transmission packet size a data packet with the new huge payload data block could be transmitted, but only half filled, while with the first transmission packet size the first data packet can be filled with the already available payload data blocks in the packet pool and a first section of the new large payload data block, and then in the next data packet the remainder of the large payload data block is transmitted, fully using the transmission packet size.

In effect the latter option may lead to a lower padding in the transmitted data packets and a lower total transmitted data amount. Therefore this will be the preferred choice, in particular when a payload optimization is envisaged. This result is achieved thanks to this embodiment.

In another preferred embodiment it is proposed that at least one payload data block has assigned a validity period, said method comprising cancelling said payload data block from the packet pool in case the validity period is expired. In this embodiment at least one payload data block is additionally provided with a validity period, which is a value indicating how long the content of the payload data block is still to be considered by the receiving side, e.g. because it is not useful anymore.

This is in particular the case where in close time periods measurements are carried out of a volatile matter, where only the actual value is of primary interest, but no history. This could apply to a temperature, or a water level of a river, as well as average speed in a traffic jam.

Preferably the validity period is oriented on the periodicity of measurement. If within 10 minutes the value is calculated and due for transmission, then a value that was not transmitted within said 10 minutes, or slightly below, does not need to be transmitted, once a new payload data block with the actual measurement value is ready to be sent.

For that reason the validity period is applied to the payload data block. Should the validity period of a payload data block, that is waiting in the packet pool, expire, then it is removed from the packet pool.

For a comparable situation if updated data also another embodiment is proposed, wherein a payload data block is cancelled in case a second payload data block with updated data arrived prior to submitting said payload data block as part of a data packet.

This embodiment comprises payload data blocks on the same matter, and leaves to cancel a payload data block from the packet pool, once an updated payload data block is available.

This embodiment has a wider applicability as it is not bound to fixed measurement periods. E.g. a warning message for a situation might be outdated, when the next message informs that the situation has already disappeared. Then the warning message does not need to be sent.

There are many ways to identify that one payload data block with a certain message is an update to another previously provided payload data block with another message.

According to a preferred embodiment it is proposed that the payload data block and the second payload data block share a predetermined priority class value, defined that way that no two payload data blocks with said predetermined priority class value may be part of the packet pool.

Here a special type of priority class value is defined. In particular the already defined transmission priority is used for this. This could be organized in classes, so that a priority class indicates that two messages relate to the same matter, but nonetheless have different transmission priority.

This priority class value indicates that the payload data blocks relate to the same matter, like warning etc.

The general rule to follow is, that at the same time only one payload data block with this priority class may be transmitted in a data packet.

Hence the latter received payload data block of said priority class overrules the previously received, and leads to removal of said previously received payload data block.

In another preferred embodiment it is proposed the step of modifying said assigned transmission priority of a payload data block taking into account at least one of:
- waiting time of the payload data block,
- validity period assigned to the payload data block.

This embodiment suggests the possibility that the transmission priority of a payload data block might change between arrival from the application and transmission in a data packet.

Such change in transmission priority has according to this embodiment at least two driving factors.

The first is the waiting time of the payload data block. Preferably for a payload data block that waits already for some time, it should be avoided that it is repeatedly pushed away by higher transmission priority payload data blocks. Hence an increase of the transmission priority will lead to sooner or later to a transmission.

With an adaptation rate this would not disturb too much the as such higher priority payload data block, but assures that no payload data block stays for hours in the queue to be submitted.

The second driving factor is the validity period assigned to the payload data block. This governs also the waiting time, and defines a maximum waiting time. Depending on the use case it is advantageous to increase the transmission priority towards the end of the validity time to avoid a cancellation.

In another use case, in particular when an up to date measurement will be delivered soon, it is also advantageous to reduce the transmission priority, as the measurement is already short before being outdated, and it is more reasonable to wait for the next updated payload data block.

Should the situation occur that due to this reduction of the transmission priority due to the validity period lease to a cancellation of the payload data block, then it is in particular useful to increase the transmission priority of the updated payload data block, in order to assure that this is with a higher likelihood in fact transmitted in a data packet.

These are preferably embodiment to amend the transmission priority of a payload data block, in order to make it fit to the individual use case. This shows the flexibility of the proposed method and will lead in effect to a reduced and more effective use of the network resources.

In a second aspect of the invention it is proposed a user equipment for operating with a base station of a wireless network, said user equipment comprising a controlling circuitry and a transmission and receiving circuitry, wherein the controlling circuitry controls the transmission and receiving circuitry, wherein the receiving circuitry is configured to receive from the base station an indication related to at least one transmission packet size,
and the controlling circuitry is configured to:
- determining a threshold size relating to said transmission packet size,
- collecting payload data blocks in a packet pool until said threshold size is reached,
- instruct the transmission circuitry to transmit at least one data packet comprising said payload data blocks being part of the packet pool to the base station.

This aspect of the invention relates to a user equipment configured for operating in a wireless network.

The user equipment is in particular composed of an application part and a wireless modem part, wherein the application is configured to produce payload data and instruct the wireless modem to send the payload data to a remote server via the wireless network.

The application part is in particular collecting data, e.g. through various kinds of sensors, like a e-meter, for water level measurement, a thermometer, but also cameras, etc.

The user equipment comprises controlling circuity. It further comprises transmission circuitry and it comprises receiving circuitry, both for carrying uplink and downlink communication with a base station resp. router of a wireless network. Preferably the transmission and receiving circuitry is located in one unit, the transceiver, which comprises the necessary hardware components for carrying out wireless signal reception and transmission.

The controlling circuitry is configured in particular to control the behavior of the transmission and receiving circuitry.

In particular the controlling circuitry receives, in particular from the application part of the user equipment, payload data blocks for being sent via the wireless network. The controlling circuitry is configured to handle the payload data blocks and instruct the transceiver when to send one or more payload data blocks, bundled in a data packet.

Such data packet is in particular, at least in the field of cellular wireless networks, like UMTS and LTE, a so called Protocol Data Unit (PDU). This may be composed in a certain size for payload data, which is defined by the base station of the wireless network.

Preferably the user equipment further comprises a memory unit for volatile and/or permanent storage. Therein the operating software, configuration data are stored, and a type of buffer memory is foreseen for payload data blocks that wait to be sent via the wireless network.

The second aspect of the invention shares the advantages of the first aspect of the invention.

As it is shown this invention advantageously solves the depicted problem and proposes a way for a better usage of network resources and in parallel a reduction of power consumption for submitting in particular minimal payload data blocks, e.g. of a few bytes.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a user equipment of the type to which the present invention is applied as an embodiment;
- Fig. 2: shows a sequence diagram of an exemplary embodiment of the inventive method;
- Fig 3a,b: show a couple of exemplifying solutions and how they are solved with an exemplary embodiment of the invention.

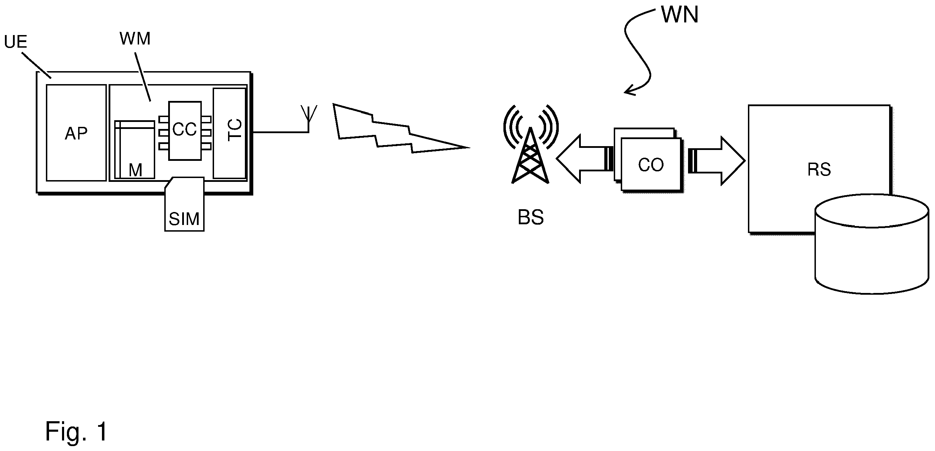

FIG. 1 schematically shows a user equipment UE of the type to which the present invention is applied as an embodiment in conjunction with a base station of a wireless network it is operating in.

The exemplifying user equipment UE comprises the components application AP and wireless module WM, wherein the application controls the wireless module through a call interface, like an AT-interface. The user equipment further has access to a subscriber identity module SIM, which is in particular removably connected or soldered, other options are also possible.

The wireless module comprises in this exemplary embodiment a transceiver circuitry TC, which holds the transmitting and receiving circuitry, and is in particular connected to an antenna. It further comprises controlling circuitry CC for controlling the transceiver circuitry TC, and accepting and processing instructions through the call interface from the application AP. The controlling circuitry is in particular a Central Processing Unit (CPU) of the wireless module WM. Further a memory unit M is comprised in the wireless modem WM, which stores volatile or permanent operating software executed by the controlling circuitry, as well as configuration data. It is additionally used for caching/buffering payload data blocks received from the application AP before they are sent in data packets to a remote server RS via the wireless network WN.

The user equipment is able to communicate via the base station BS of a wireless network WN. This is preferably a wireless network of one of the known wireless communication standards, like in cellular UMTS, LTE, NR, or in non-cellular Wifi, Wimax, Sigfox etc. The wireless network provides access to at least one remote server RS, preferably through access

The user equipment is preferably an loT device, that is supposed to operate mainly alone, without involvement of a human operator, except for some installation and maintenance routines. For that the user equipment preferably makes available a user interface, either hardware like when being at the location where the user equipment is located, in particular installed, our through remote access, e.g. through a configuration website which is made available through a webserver running on the application part of the user equipment.

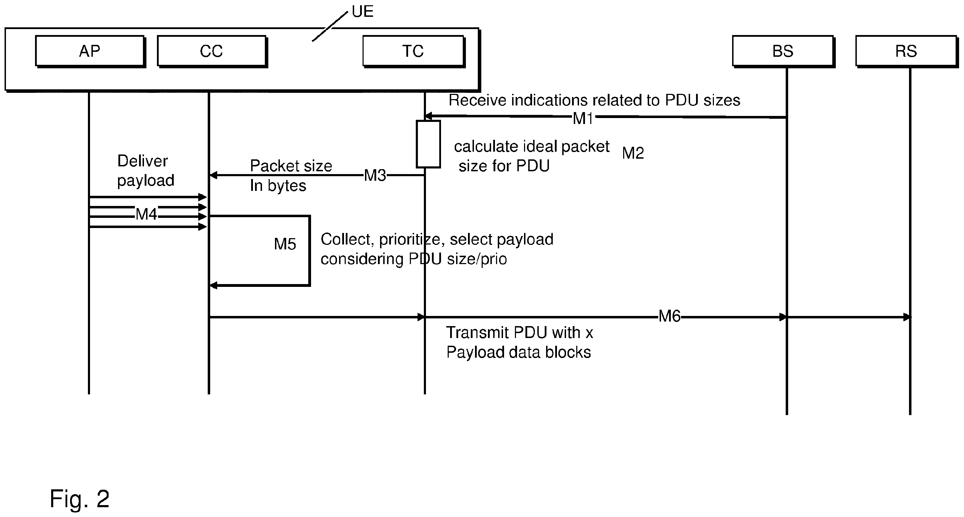

Fig. 2 shows a sequence diagram of a preferable embodiment of the inventive method. The actors are the parts of the user equipment UE, which is the application AP, the controlling circuitry CC of the wireless module WM and the transceiver circuitry TC, as well as the base station BS, and the remote server RS.

The shown embodiment shows in particular a base station of a cellular network, that is for 3G a nodeB, for 4G an eNodeB and for 5G a gNodeB. This base station sends with message M1 and indication related to the size of data packets, in this case PDUs. This is the transmission packet size. This is usually happening in conjunction with setting up a connection session of the user equipment with the base station. In parallel to resource assignments by the base station preferably a set of transport block size (TBS) indications are submitted to the transceiver circuitry TC.

Preferably a group of transmission packet sizes are transmitted, and the user equipment choses the one which fits best, which may however be way too large for the user equipment's requirements.

In this embodiment the transceiver circuitry calculates in step M2 the ideal packet size for a PDU, here in bytes, taking into account the transmission packet size. Preferably this is a selection from the received set of TBS values. The results of this step is with message M3 made available to the controlling circuitry CC.

Here in particular a threshold size of the packet pool for gathering a data packet resp. PDU is determined considering the packet size. This step is only carried out if the threshold size is below the packet size.

In any case, after that the controlling circuitry is ready to receive payload data blocks from the application AP.

In this shown embodiment it is visible that for configuring the controlling circuitry for managing the data packet vs payload data block handling no input from the application AP is necessary. That may be different depending upon the type of user equipment. Of course through call interface the application could - in particular at an installation phase - instruct the wireless module WM about a preferred threshold size or a value where this threshold size can be derived from.

After these preparatory steps which may be carried out after a first start of the user equipment, the operation during runtime starts with one of the many messages M4, where the application sends at least one payload data block to the controlling circuitry.

This is payload data block comprises in particular the measured data of the application AP, which are supposed to be send to the remote server RS. Preferably for the application AP this is simply a "send data" instructions, where it is fully transparent for the application when this payload data block is transmitted.

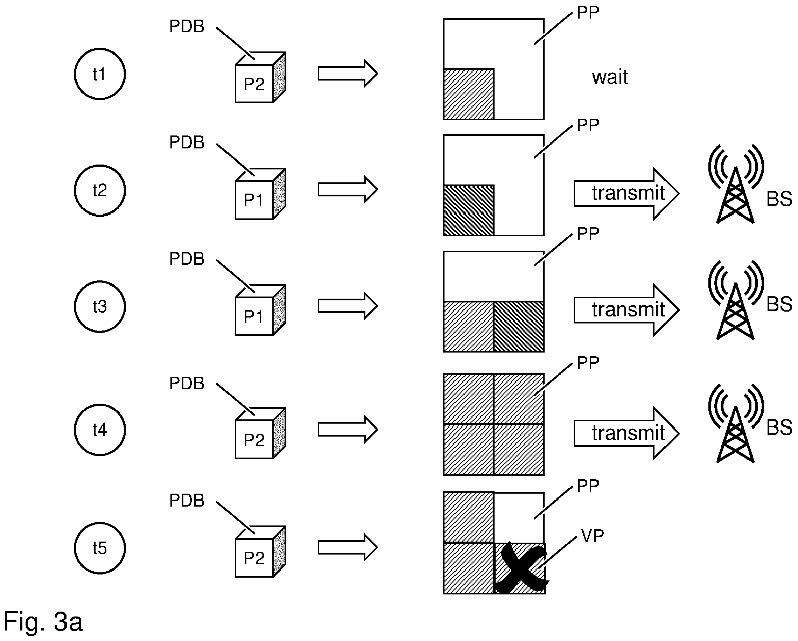

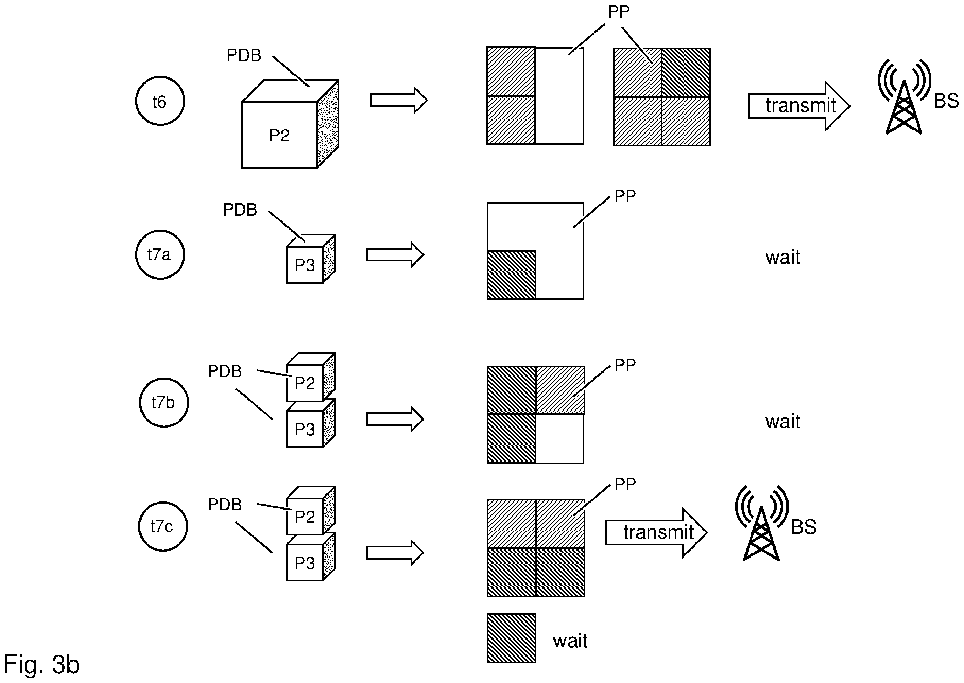

In step M5 the controlling circuitry carries out the collection and prioritization steps, which are shown in exemplifying details in Fig. 3, for collecting a data packet resp. PDU, taking into account the packet size or the threshold size determined before.

When the collected payload data blocks in the packet pool are sufficiently large in size in comparison with the threshold size, the controlling circuitry carries out the transmission step M6. This message sends the collected payload data blocks in the packet pool transformed into a PDU data packet by means of the transceiver circuitry TC to the base station BS. The PDU comprises a destination address of the remote server, with the wireless network makes this PDU available to the remote server, in particular through the internet.

In Fig. 3a a couple of initial exemplifying situations are shown and how they are handled in an exemplifying implementation of the inventive method. The general structure of the shown situations is, that from the application AP, preferably through the call interface, the controlling circuitry receives a payload data block PDB. It handles at least one packet pool, and has to decide with each arriving payload data block PDB, what to do, in particular if the packet pool is transformed into a data packet resp. PDU and transmitted to the base station.

For all shown situations, if not indicated differently, it is assumed that the threshold size equals the size of the packet pool PP.

Situation T1 shows the simple situation that the application AP makes available of a payload data block PDB with a certain transmission priority P2. The packet pool is empty up to now, therefore the payload data block PDB is added to the packet pool PP, and no transmission is carried out.

In situation T2 a payload data block PDB with transmission priority P1 arrives. This is the highest transmission priority and leads to the decision that - regardless of the packet pool size in comparison with the threshold size - the collected packet pool is transmitted as a PDU to the base station.

In this situation T2 the packet pool was empty, and the transmission took place. In situation T3 however the same kind of payload data block PDB with a transmission priority of P1 arrives, therefore the same decision needs to be taken to transmit the packet pool to the base station.

The difference to the previous situation is however that the packet pool is not empty, when the payload data block PDB arrived, but a previously received payload data block PDB with a lower transmission priority is already collected in the packet pool, like in situation T1.

This leads to the outcome that the data packet transmitted to the base station both comprises the higher transmission priority and the lower transmission priority payload data block.

The packet pool is empty after this transmission.

In situation t4 another payload data block of transmission priority P2 is arrived from the application. In this situation the packet pool had already collected three payload data blocks of the same - or a lower - transmission priority. With the arriving payload data block PDB the packet pool reaches the threshold size. Consequently all four payload data blocks are transmitted in a PDU to the base station.

Situation t5 shows that a payload data block of transmission priority P2 arrived. The packet pool PP up to then was already filled with two payload data blocks with the same transmission priority as the new payload data block.

At least one of the payload data blocks already collected in the packet pool was further equipped with a validity period VP. That is like a destination time, or maximum duration for transmitting the payload data block. Should the validity period be expired, then the payload data block is outdated. That is in particular the case with measurements that are preferably made anew anyhow or do not have a value for the receiving remote server, when not received within a certain time. This is e.g. the case for traffic jam indications, or other very volatile situations.

In this case the payload data block with the validity period VP was in waiting status in the packet pool for too long. Therefore it is cancelled from the packet pool, and will therefore not be transmitted anymore.

The newly arrived payload data block PDB is put into the packet pool, therefore still two payload data blocks wait in the packet pool until they will be sent.

Fig. 3b shows further situations T6 to T7. In situation T6 a large payload data block PDB arrives with a transmission priority of P2. It is larger than the maximum size of the packet pool, resp. the PDU.

By now the packet pool has already collected one payload data block of the transmission priority P3.

This situation is handled by the inventive method by splitting up the arriving payload data block so that it fits into more than one packet pool PP. In this case the payload data block has the size of 5 regular payload data blocks PDB, wherein only 4 fit into a packet pool PP.

Therefore the payload data block PDB is split into two fractions, one of the size of three regular payload data block, thus filling up the packet pool with the already waiting payload data block. The rest is put into a second packet pool PP.

Both packet pools are now transmitted, preferably sequentially, via the base station.

This is true although the second packet pool did not reach the threshold size, but to avoid that the rest of the payload data block waits unpredictable long.

Due to the fact that the already waiting payload data block has a lower transmission priority than the large payload data block, it would also be an option to remove it from the first packet pool, and fill this only with the first fraction of the large payload data block. Should it then fit into the second payload data block, along with the second fraction of the large payload data block, then it could be sent with the second fraction. Otherwise it would be pushed into a third packet pool, and remain waiting until it is sent, as long as no validity period falls due.

The final situation T7 is shown in the separate situation steps. Here the regular transmission priority handling is demonstrated.

In the first step T7a shows the known situation, that a payload data block PDB of a lower transmission priority, here P3, arrives and is put in a up to now empty packet pool PP. Neither is the transmission priority high enough, nor is the threshold value of the packet pool reached, hence no transmission is carried out.

At the next step T7b, that is in the next time slot for reiving data from the application, two payload data blocks arrive. One has the same transmission priority P3, and one a higher transmission priority of P2.

Both fit into the packet pool PP, and still the packet pool is not at its threshold size, so no data transmission is carried out again.

In step T7c again two payload data blocks arrive having the same transmission priorities as in the previous step.

In the packet pool is only space available for one payload data block. Here the transmission priority is considered, and consequently the payload data block with transmission priority of P2 is accepted, while the payload data block with transmission priority of P3 needs to wait. The filled packet pool is then transmitted as PDU to the base station.

Would in step T7c two payload data blocks with transmission priority P2 have arrived, then one of the payload data blocks with transmission priority P3 would have been removed in waiting position. The packet pool equipped with three payload data blocks having transmission priority P2, and one with transmission priority P3 would have been transmitted. For deciding which payload data block with transmission priority P3 is to remove preferably the time of arrival is reckoned. Alternatively an urgency through the validity period is taken into account.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for uplink data transmission in a wireless network (WN) through a user equipment (UE) operating with at least one base station (BS) of said wireless network (WN), comprising:
- receiving from said base station (BS) information indicative of at least one transmission packet size,
- determining a threshold size considering said at least one transmission packet size,
- collecting at least one payload data block (PDB) in a packet pool (PP),
- determining a packet pool size from the collected payload data blocks (PDB), in case the packet pool size reaches the threshold size:
- transmitting at least one data packet comprising said payload data blocks (PDB) being part of the packet pool (PP) to the base station (BS).

2. Method according to claim 1,
wherein at least one payload data block (PDB) has assigned a transmission priority, wherein a payload data block (PDB) with a higher transmission priority is considered for data transmission prior to a payload data block (PDB) with lower transmission priority.

3. Method according to claim 2,
wherein for determining the assigned transmission priority of at least one payload data blocks (PDB) the method comprises considering at least one of:
- an status change of the user equipment (UE),
- an input received from a remote server (RS) and/or the wireless network (WN),
- an outside impact on the user equipment (UE).

4. Method according to at least one of the claims 1 to 3,
wherein in case a payload data block (PDB) with a predetermined transmission priority is collected, the transmission of said data packet is carried out regardless of the threshold size.

5. Method according to at least one of the claims 1 to 4,
wherein in case the payload data block (PDB) is larger than the transmission packet size,
carrying out the transmission of said data packet by splitting up said payload data block (PDB) in at least two data packets.

6. Method according to claim 5,
wherein in case said payload data block (PDB) larger in size than the transmission packet size has a higher transmission priority than the at least one payload data block (PDB) already being collected in the packet pool (PP), hereinafter the at least one lower priority payload data block (PDB),
the method comprises the step of removing said at least one lower priority payload data block (PDB) from the packet pool for the transmission of the split up payload data blocks, and
adding said at least one lower priority payload data block (PDB) to the packet pool once it allows adding payload data blocks (PDB) of lower transmission priority.

7. Method according to at least one of the claims 1 to 6,
wherein said step of reception of an information indicative of at least one transmission packet size comprises receiving information indicative of at least two transmission packet sizes,
and selecting one of the at least two transmission packet sizes,
in case of said payload data block (PDB) being larger in size than the selected transmission packet size the method further comprises the step of:
selecting out of the at least two transmission packet sizes the one with that the packet pool size is achieved, that is closer to the threshold size derived from said one transmission packet size.

8. Method according to at least one of the claims 1 to 7,
wherein at least one payload data block has assigned a validity period,
said method comprising cancelling said payload data block (PDB) from the packet pool (PP) in case the validity period is expired.

9. Method according to claim 8,
wherein a payload data block is cancelled in case a second payload data block (PDB) with updated data arrived prior to submitting said payload data block (PDB) as part of a data packet.

10. Method according claim 9,
wherein the payload data block (PDB) and the second payload data block (PDB) share a predetermined priority class value, defined that way that no two payload data blocks with said predetermined priority class value may be part of the packet pool (PP).

11. Method according to at least one of the claims 8,
comprising modifying said assigned transmission priority of a payload data block taking into account at least one of:
- waiting time of the payload data block (PDB),
- validity period assigned to the payload data block (PDB).

12. User equipment (UE) for operating with a base station (BS) of a wireless network (WN), said user equipment (UE) comprising a controlling circuitry (CC) and a transmission and receiving circuitry (TC), wherein the controlling circuitry (CC) controls the transmission and receiving circuitry (TC),
wherein the receiving circuitry is configured to receive from the base station an indication related to at least one transmission packet size,
and the controlling circuitry (CC) is configured to:
- determining a threshold size relating to said transmission packet size,
- collecting payload data blocks (PDB) in a packet pool (PP) until said threshold size is reached,
- instruct the transmission circuitry (TC) to transmit at least one data packet comprising said payload data blocks (PDB) being part of the packet pool to the base station (BS).

13. User equipment (UE) according to claim 12,
wherein at least one payload data block (PDB) has assigned a transmission priority, wherein a payload data block (PDB) with a higher transmission priority is considered for data transmission prior to a payload data block (PDB) with lower transmission priority.

14. User equipment (UE) according to at least one of the claims 12 or 13, wherein in case a payload data block (PDB) with a predetermined transmission priority is collected, the controlling circuitry (CC) is configured to instruct the transmission of said data packet regardless of the threshold size.

15. User equipment (UE) according to at least one of the claims 12 or 14, wherein said reception of an information indicative of at least one transmission packet size comprises to receive information indicative of at least two transmission packet sizes, and to select one of the at least two transmission packet sizes,
in case of said payload data block (PDB) being larger in size than the selected transmission packet size the controlling circuitry (CC) is further configured to select out of the at least two transmission packet sizes the one with that the packet pool size is achieved, that is closer to the threshold size derived from said one transmission packet size.

16. User equipment (UE) according to at least one of the claims 12 to 16, wherein at least one payload data block (PDB) has assigned a validity period, and the controlling circuitry (CC) is configured to cancel said payload data block (PDB) from the packet pool (PP) in case the validity period is expired.

17. User equipment (UE) according to claim 16,
wherein the controlling circuitry (CC) is configured to modify said assigned transmission priority of a payload data block (PDB) taking into account at least one of:
- waiting time of the payload data block (PDB),
- validity period assigned to the payload data block (PDB).
